**Europäisches Patentamt**

**European Patent Office**

**Office européen des brevets**

(11) Veröffentlichungsnummer: **0 353 568**

**A1**

(12) # EUROPÄISCHE PATENTANMELDUNG

(21) Anmeldenummer: **89113458.7**

(22) Anmeldetag: **21.07.89**

(51) Int. Cl.⁴: **H04N 9/88**

(30) Priorität: **26.07.88 DE 3825387**

(43) Veröffentlichungstag der Anmeldung:
**07.02.90 Patentblatt 90/06**

(84) Benannte Vertragsstaaten:
**BE DE FR GB NL**

(71) Anmelder: **Siemens Aktiengesellschaft**
**Wittelsbacherplatz 2**
**D-8000 München 2(DE)**

(72) Erfinder: **Lüder, Rainer, Dr.-Ing.**
**Kohlstattstrasse 10**
**D-8024 Oberhaching(DE)**
Erfinder: **Schulz, Peter, Dipl.-Ing.**
**Döderleinstrasse 4**
**D-8000 München 70(DE)**
Erfinder: **Bayer, Erich, Dipl.-Ing.**
**Ismaninger Strasse 24**
**D-8050 Freising(DE)**
Erfinder: **Braun, Bodo, Dr.-Ing.**
**St.-Cajetan-Strasse 14**
**D-8000 München 80(DE)**

(54) **Verfahren zum Reduzieren der beim Abspielen von Videomagnetbändern in Videorekordern auftretenden Bildstörungen und Vorrichtung zur Durchführung des Verfahrens.**

(57) Bei Videorekordern können in den Sonderbetriebsarten (z. B. Suchlauf, Zeitlupe etc.) Störungen im Videosignal auftreten. Diese Störungen sind auf die unumgänglichen Spurwechsel der Videoköpfe zurückzuführen und machen sich als stark gestörte Bildstreifen bemerkbar. Zur Reduzierung dieser Störungen ist erfindungsgemäß ein Verfahren und eine Vorrichtung zur Durchführung des Verfahrens vorgesehen, bei welchem das Videosignal digitalisiert, in eine Speichereinrichtung eingeschrieben und anschließend wieder ausgelesen wird. Beim Auftreten einer Störung wird das Einschreiben für die Dauer der Störung unterbrochen, so daß in der Speichereinrichtung stets ungestörte Videosignaldaten gespeichert sind. Eine geeignete Taktankopplung sorgt stets für ein ungestörtes Auslesen der gespeicherten Daten.

FIG 10

FIG 11

# Verfahren zum Reduzieren der beim Abspielen von Videomagnetbändern in Videorekordern auftretenden Bildstörungen und Vorrichtung zur Durchführung des Verfahrens

Die Erfindung betrifft ein Verfahren zum Reduzieren der beim Abspielen von Videomagnetbändern in Videorekordern auftretenden Bildstörungen nach dem Oberbegriff des Anspruchs 1 und eine Vorrichtung zur Durchführung des Verfahrens.

Bei Videorekordern treten in den Sonderbetriebsarten (z. B. Suchlauf, Zeitlupe, Rückwärtsbetrieb etc.) Störungen im analogen Videosignal auf, die sich als stark gestörte Bildstreifen (ca. 10 bis 50 Halbbildzeilen) bemerkbar machen. Diese Bildstörungen sind auf die in den Sonderbetriebsarten bei Schrägspuraufzeichnungsverfahren wie VHS, BETA-MAX, VCR, usw. unumgänglichen Videospurwechsel der Videoköpfe zurückzuführen (vgl. z. B. Morgenstern, B.: Technik der magnetischen Videosignalaufzeichnung; Teubner Studienskripten, 1981, Seiten 121-128 und 159-163). Bei diesen unvermeidbaren Videospurwechseln der Videoköpfe ist sowohl das Bildsignal als auch das Synchronsignal H des Videosignales gestört. Diese Störungen sind unter der Bezeichnung "Spurwechselstörungen" bekannt und beruhen darauf, daß ein Videokopf eine für ihn nicht bestimmte Videospur überstreicht. "Spurwechselstörzonen" sind also durch die Teile des Videosignales bwz. des Bildsignales bedingt, in denen ein Videokopf die Information eines Halbbildes liest, das im störungsfreien Normalbetrieb von einem zweiten Videokopf mit anderer Magnetisierungsausrichtung gelesen wird.

Bildstörungen beim Abspielen von Videomagnetbändern in Videorekordern werden aber auch durch Fehler in der magnetischen Beschichtung des Videomagnetbandes bzw. durch auf dem Magnetband befindliche Schmutzpartikel verursacht. Diese sogenannten Drop-out-Fehler führen zu verrauschten Zeilen im dargestellten Bild. Je häufiger ein Videoband abgespielt wird, desto vermehrt treten diese Störungen auf, da das Bandmaterial abgenutzt wird. Auch eine Verschmutzung des Videobandes kann diese Drop-out-Fehler hervorrufen.

Es ist bekannt, diese Drop-out-Fehler durch analoge oder digitale Zeilenwiederholung zu kompensieren (vgl. Morgenstern B.; a.a.O. und Friedrich Manz: Videorekorder-Technik, Vogel-Verlag, Würzburg, 1979, Seite 111 bis 115). Ist z. B. ein Teil der 25sten Zeile infolge eines Materialfehlers gestört, d. h., daß an dieser Stelle ein Signaleinbruch des analogen Videosignales auftritt, so wird über eine geeignete Drop-out-Kompensationsschaltung erreicht, daß bei einem 50 Hz-Bildsignal ein um 64 Mikrosekunden verzögerte Signalanteil der vorhergehenden 24sten Zeile hier eingefügt wird. Der Erfolg ist eine Regenerierung der gestörten 25sten Zeile, die zwar das Signal verfälscht aber optisch unsichtbar bleibt.

Bei Spurwechselstörungen ist dieses Verfahren jedoch nicht einsetzbar, da - wie oben bereits ausgeführt - 10 bis 50 Halbbildzeilen gestört sind. Bekannte Problemlösungen zur Reduzierung von Spurwechselstörungen setzen bei der Gewinnung eines mit möglichst wenig störenden Störzonen behafteten Videosignales an. Außerdem werden im allgemeinen Bandzug- und Kopftrommelservo der Videorekorder so gesteuert, daß die Störzonen am oberen oder unteren Bildrand zu stehen kommen (vgl. Morgenstern, B.; Seiten 126, 127).

Aus der EP 36 35 255 C2 ist ein Verfahren zur Verbesserung der Bildqualität beim Abspielen von Videorekordern während der Zeitlupenwiedergabe beschrieben. Dazu wird das Videomagnetband intermittierend angetrieben, in einem Bandstopzustand während des Betriebes ein Videosignal in eine Speichereinrichtung eingeschrieben und das eingeschriebene Signal im Bandantriebszustand aus der Speichereinrichtung wieder ausgelesen. Dieses Verfahren ist jedoch nur für Zeitlupenwiedergabe anwendbar und beruht auch auf der Gewinnung eines mit möglichst wenig Störzonen behafteten Videosignals.

Der vorliegenden Erfindung liegt die Aufgabe zugrunde, ein Verfahren zum Reduzieren der beim Abspielen von Videomagnetbändern in Videorekordern auftretenden Bildstörungen anzugeben, mit welchen die Bildstörungen auch dann reduziert werden können, wenn ein gestörtes Videosignal vorliegt.

Diese Aufgabe wird durch die kennzeichnenden Merkmale des Anspruchs 1 gelöst.

Weiterbildungen der Erfindung sind Gegenstand der Unteransprüche.

Eine Vorrichtung zur Durchführung des Verfahrens ist durch die Merkmale des Anspruchs 6 gekennzeichnet.

Bei der vorliegenden Erfindung wird die Tatsache ausgenutzt, daß zeitlich aufeinanderfolgende Bilder ähnlich sind. Das erfindungsgemäße Verfahren setzt beim gestörten Videosignal an und nutzt die zeitlichen Abhängigkeiten in Bewegtbildszenen aus. Es unterscheidet sich grundlegend von den herkömmlichen Verfahren zur Reduktion des Störzoneneinflusses und zur Drop-out-Kompensation durch Zeilenwiederholung. Die Erfindung beruht darauf, daß eine auftretende Störung des Videosignales erfaßt und ein Schreibverhinderungssignal generiert wird. Liegt ein Schreibverhinderungssignal vor, d. h. daß das Videosignal gestört ist, so wird das Einschreiben der gestörten Videosignaldaten in die Speichereinrichtung verhindert, so daß beim Auslesevorgang die ortsgleiche Bildinformation des letzten ungestörten Videosignales herangezogen wird. Zur Minimalisierung von Bewegungsstörungen muß gefordert werden, daß die Störzonen in aufeinanderfolgenden Bildern bzw. halbbildern örtlich überlappungsfrei sind. Dieses Problem kann durch eine geeignete Bandlaufsteuerung gelöst werden.

Die Erfindung wird im folgenden anhand von 12 Figuren näher erläutert.

Es zeigen:

FIG 1 auf einem Bildschirm zeitlich nacheinander erscheinende Zeilen von Halbbildern, ·

FIG 2 Videospuren auf einem mit Normalgeschwindigkeit bewegtem Videomagnetband, welches abwechselnd von zwei Videoköpfen abgetastet wird , wobei das Videomagnetband Drop-out-Fehler aufweist,

FIG 3 das am Bildschirm dargestellt Signal zu FIG 2,

FIG 4 Videospuren und Videokopfbewegung bei doppelter Bandgeschwindigkeit (Suchlauf mit doppelter Geschwindigkeit)

FIG 5 das am Bildschirm dargestellte Signal zu FIG 4,

FIG 6 Videospuren und Videokopfbewegung bei vierfacher Bandgeschwindigkeit (Suchlauf mit vierfacher Geschwindigkeit)

FIG 7 das am Bildschirm dargestellte Signal zu FIG 6,

FIG 8 Videospuren und Videokopfbewegung bei halber Bandgeschwindigkeit (Zeitlupe mit halber Geschwindigkeit),

FIG 9 das am Bildschirm dargestellte Signal zu FIG 8,

FIG 10 Erzeugen eines Schreibverhinderungssignals in Abhängigkeit von der Störzone,

FIG 11 Schaltungsanordnung zur Reduzierung der beim Abspielen von Videomagnetbändern in Videorekordern auftretenden Bildstörungen,

FIG 12 Schaltungsanordnung für die Takteinrichtung der Schaltungsanordnung nach FIG 11.

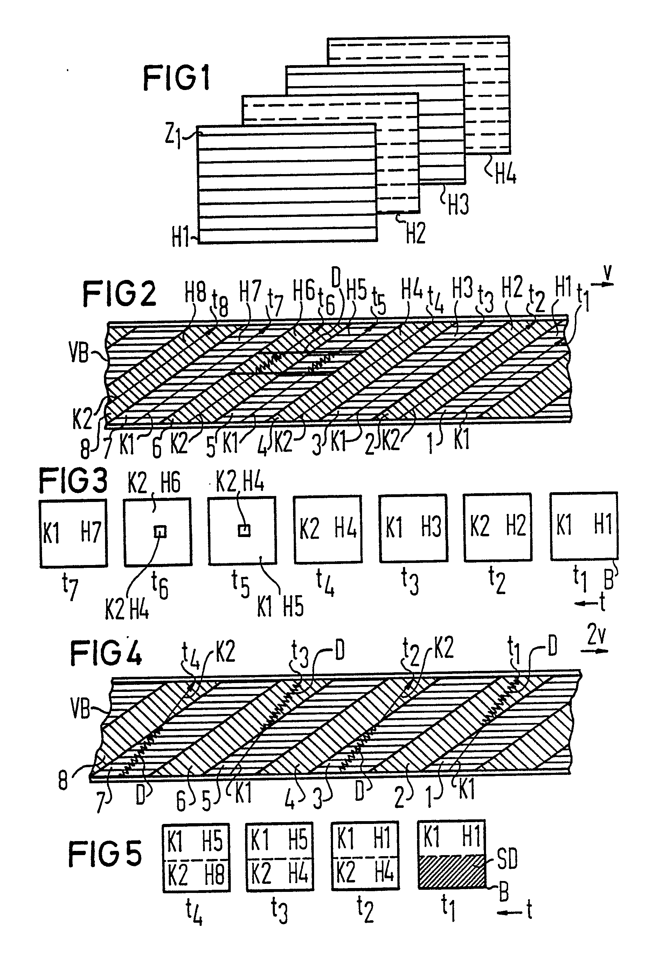

In FIG 1 sind die am Bildschirm nacheinander erscheinenden Zeilen der Halbbilder H1, H2, H3, H4 usw. dargestellt, wie sie sich ergeben, wenn das Videomagnetband eines Videorekorders abgespielt wird. Das erste Halbbild H1 erscheint mit dem Abtasten der ersten Videospur durch den ersten Videokopf, während das zweite halbbild H2 mit dem Überstreichen der zweiten Videospur durch den zweiten Videokopf erscheint usw. Zum Zeitpunkt t1 (t2) ist die letzte Zeile Z des ersten (zweiten) Halbbildes am Bildschirm geschrieben. Die Zeilen Z der einzelnen Halbbilder sind zueinander versetzt angeordnet.

In FIG 2 ist ein Videoband mit Videospuren und der dazugehörigen Videokopfbewegung eines 2-Kopf-Videorekorders bei normaler Geschwindigkeit v, d. h. Wiedergabebetrieb, dargestellt. Die Videospuren 1, 2, 3 usw. sind nach dem Schrägspuraufzeichnungsverfahren auf das Videoband VB aufgebracht. Die unterschiedliche Schraffierung der geraden und ungeraden Videospuren deutet auf deren unterschiedliche Magnetisierungsrichtung hin, auf die jeweils einer der beiden Köpfe K1 und K2 optimiert ist. Bei normalem Wiedergabebetrieb bewegen sich die zwei um 180° versetzt auf einer rotierenden Kopftrommel befindlichen Videoköpfe K1 bzw. K2 über die Videospuren entsprechend den Pfeilen nach FIG 2. Der erste Videokopf K1 überstreicht nur die ungeraden Videospuren 1, 3, 5 ..., während der zweite Videokopf K2 nur die geraden Videospuren 2, 4, 6 ... erfaßt. Bei einwandfreiem Normalbetrieb laufen die Videoköpfe parallel zu den Videospuren. In jeder Videospur 1, 2, 3 ... ist ein Halbbild H1, H2, H3... aufgezeichnet. Gemäß der Erfindung werden die analogen Videosignaldaten, die vom Videokopf K1 oder K2 erfaßt werden, nach Maßgabe eines Einschreibtaktsignales digitalisiert und in die Speicherplätze einer Speichereinrichtung geschrieben. Nach maßgabe eines Auslesetaktsignales werden diese Videosignaldaten wieder ausgelesen. Zum Zeitpunkt t1 stehen damit in den Speicherplätzen der Speichereinrichtung diejenigen Videosignaldaten, die bis zum Zeitpunkt t1 vom Videokopf K1 beim Überstreichen der Videospur 1 des Halbbildes H1 gewonnen werden. Zum Zeitpunkt t2 befindet sich in der Speichereinrichtung diejenige Information, die der Videokopf K2 beim Überstreichen der Videospur 2 des zweiten halbbildes H2 gewonnen hat. Zur Vereinfachung der Schreibweise werden diese Daten im folgenden mit KnHm bezeichnet, wobei n den Videokopf bezeichnet und m die Daten des m-ten Halbbildes. Zum Zeitpunkt t3 befinden sich demnach die Videosignaldaten K1H3 auf den Speicherplätzen der Speichereinrichtung. In FIG 3 ist das am Bildschirm B dargestellte Signal und der dazugehörige Speicherinhalt für die verschiedenen Zeitpunkte t1, t2 usw. schematisch dargestellt, wenn gilt, daß beim Überstreichen des Videobandes von unten nach oben durch einen Videokopf entsprechend der Pfeildarstellung in FIG 2 der Bildschirm von oben nach unten mit den aufgezeichneten Videosignalen beschrieben wird.

Gemäß FIG 2 weist die Videospur 5 und 6 einen Fehler in der magnetischen Beschichtung auf. Am Ausgang des Videokopf K1 erscheint beim Überstreichen der Videospur 5 kurzzeitig ein Signaleinbruch, ebenso am Videokopf K2 beim Überstreichen der Videospur 6. Der fehlerhafte Bereich des Videobandes VB ist mit D gekennzeichnet.

Gemäß der Erfindung wird das Einschreiben der durch die Störung des analogen Videosignales bedingten gestörten Videosignaldaten in die Speichereinrichtung verhindert. Demnach befinden sich in den Speicherplätzen der Speichereinrichtung zum Zeitpunkt t5 die Videosignaldaten K1H5 mit Ausnahme desjenigen Teils der Speichereinrichtung der nicht mit neuen Videosignaldaten überschrieben wurde. In diesem nicht überschriebenen Bereich befinden sich weiterhin die vorherigen Videosignaldaten K2H4. Zum Zeitpunkt t6 werden die Speicherplätze der Speichereinrichtung mit den ungestörten Videosignaldate K2H6 überschrieben, während auch hier die gestörten Videosignaldaten nicht zur Speichereinrichtung gelangen. In diesem Bereich der Speichereinrichtung steht weiterhin die Information K2H4. Zum Zeitpunkt t7 erfaßte der Videokopf K1 ausschließlich ungestörte analoge Videosignale. Diese ungestörten analogen Videosignale werden digitalisiert, in ein geeignetes Speicherformat konvertiert und anschließend in die Speicherplätze der Speichereinrichtung geschrieben. In der Speichereinrichtung befindet sich die fehlerfreie Information K1H7. In FIG 3 ist die dazugehörige Bilddarstellung<sup>B</sup> aufgeführt.

In FIG 3 ist das Videoband VB mit der Videokopfbewegung der Videoköpfe K1 und K2 bei zweifach erhöhter Geschwindigkeit 2v gegenüber der normalen Wiedergabegeschwindigkeit v dargestellt. Als Folge der doppelten Bandgeschwindigkeit überstreichen die Videoköpfe K1 und K2 jeweils teilweise zwei Videospuren. Es entstehen Spurwechselstörzonen dadurch, daß die Videoköpfe K1, K2 für sie nicht bestimmte Videospurenbereiche D überstreichen. In diesen Bereichen D ist es nicht möglich die analogen Videosignale, die durch die Videoköpfe erfaßt werden, störungsfrei zu detektieren. So überstreicht der zweite Videokopf K2 nur die untere Hälfte der Videospur 3 um dann in die obere Hälfte der vierten Videospur 4 zu wechseln. Der erste Videokopf K1 überstreicht anschließend die untere Hälfte der fünften Videospur 5 und die obere Hälfte der Videospur 6. Die in den Bereichen SD erfaßten Videosignale sind gestört.

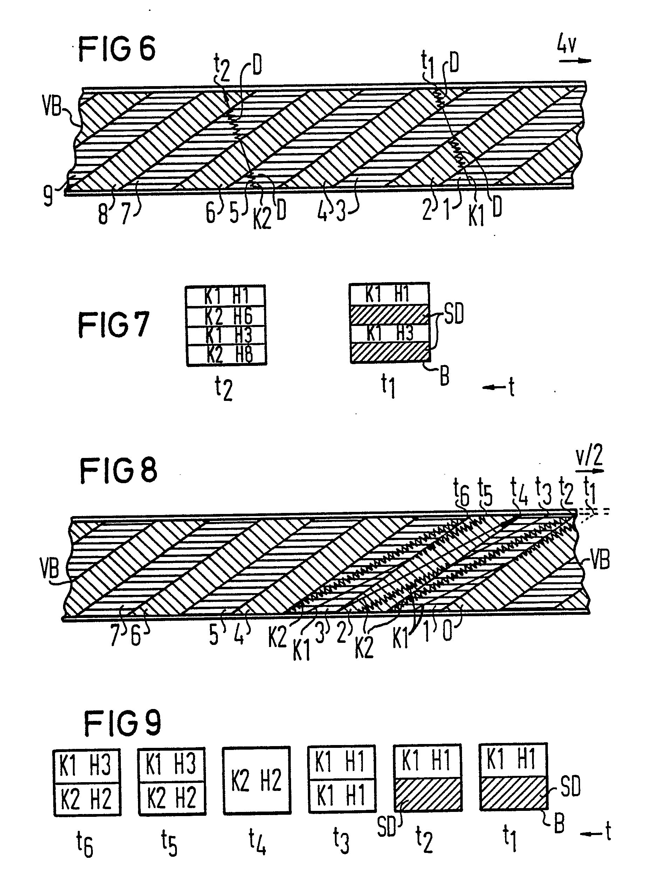

In FIG 5 ist wieder schematisch das Bildschirmsignal, gewonnen durch die Speichereinrichtung FM, dargestellt. Zum Zeitpunkt t1 befindet sich auf den Speicherplätzen der Speichereinrichtung FM nur diejenige Information, die durch Überstreichen des ersten Videokopfes K1 ermittelt wurde, also K1H1. Zum Zeitpunkt t2 wird der vorher nicht mit Videosignaldaten beschriebene Teil der Speichereinrichtung mit Videosignaldaten beschrieben, die durch Überstreichen des Videokopfes K2 der Videospur 4 gewonnen wurde. Im ersten Teil der Speichereinrichtung verbleibt demnach die Information K1H1, während in den zweiten Teil der Speichereinrichtung die Videosignaldaten K2H4 geschrieben werden usw.

In FIG 6 sind das Videoband VB und die Videospuren 1,2,3... der abtastenden Videoköpfe K1 und K2 bei vierfach erhöhter Bandgeschwindigkeit 4v dargestellt. In FIG 7 ist die dazugehörige Bildschirmdarstellung<sup>B</sup>, wie sie nich durch Auslesen der Speichereinrichtung ergibt, wiederum schematisch dargestellt. Die bereits bekannten Bezugszeichen bezeichnen die gleichen Teile. Für das Verständnis der Wirkungsweise der Erfindung bei vierfach erhöhter Bandgeschwindigkeit 4v genügt es, wenn allein der Speicherinhalt zum Zeitpunkt t2 näher beschrieben wird. Die Speichereinrichtung ist jetzt mit vier verschiedenen Infor mationsblöcken beschrieben. Wird die in der Speichereinrichtung gespeicherte Information ausgelesen und am Bildschirm dargestellt, so zeigt sich im oberen Viertel des Bildschirmes die Information, die aus den Videosignaldaten K1H1 gewonnen wurden. Darunter befindet sich die Information K2H6. Daran schließt sich die Information K1H3 an. Das untere Viertel des Bildschirmes enthält die Information K2H8. Zum Zeitpunkt t₁ weist der Bildschirm<sup>B</sup> gemäß FIG 7 zwei Störzonenbereiche SD auf.

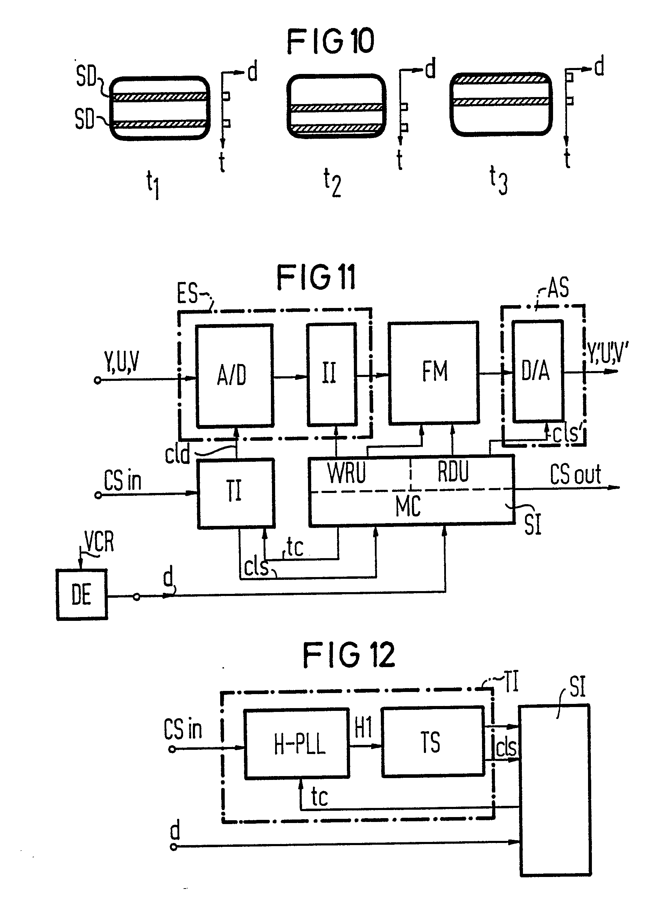

In den FIG 8 und 9 ist das erfindungsgemäße Verfahren bei halber Bandgeschwindigkeit v/2, also Zeitlupendarstellung, graphisch dargestellt. Um Wiederholungen zu vermeiden, soll jetzt lediglich der Speicherinhalt zum Zeitpunkt t3 erläutert werden. Zum Zeitpunkt t3 hat beispielsweise der erste Videokopf K1 die ganze Breite des Videobandes VB abgetastet. Auf den Speicherplätzen , die den oberen Bildinhalt wiedergeben, befindet sich die Information K1H1. Auch die untere Bildhälfte enthält die Information K1H1, welche aber bereits zum Zeitpunkt t1 in die Speichereinrichtung eingeschrieben wurde. Ansonsten wird auf FIG 9 im einzelnen hingewiesen.

Aus den genannten Beispielen ist klar ersichtlich, daß zur Minimalisierung von Bewegungsstörungen im Bild gefordert werden muß, daß die Störzonen in aufeinanderfolgenden Halbbildern örtlich überlappungsfrei auftreten. Dieses Problem kann durch eine geeignete Bandlaufsteuerung gelöst werden.

In FIG 10 ist der Zusammenhang zwischen dem Generieren des Schreibverhinderungssignales d und dem Auftreten der Störzonen SD gezeigt. Gemäß der Erfindung wird bei einem auftretenden Schreibverhinderungssignal d das Einschreiben der gestörten Videosignaldaten in die Speicherplätze der Speichereinrichtung verhindert.

Das Einschreiben der Videosignaldaten in die Speicherplätze der Speichereinrichtung erfolgt nach Maßgabe eines Einschreibtaktsignales, während mit Hilfe eines Auslesetaktsignales diese Videosignaldaten wieder ausgelesen werden können. Wird das Einschreibtaktsignal aus einem Synchronsignal H des Videosignales gewonnen, so sind gemäß einer Weiterbildung der Erfindung das Einschreibtaktsignal und das Auslesetaktsignal phasenstarr miteinander verkoppelt. Beim Auftreten des Schreibverhinderungssignales d wird die phasenstarre Verkopplung von Auslesetaktsignal und Einschreibtaktsignal aufgehoben und eine externe Taktankopplung eingeleitet. Dies ist deshalb nötig, da auch bei auftretenden Störungen des Videosignales eine ungestörte Darstellung des Inhaltes der Speichereinrichtung gewährleistet sein muß. Bei Störungen des Videosignales ist aber auch das Eingangssynchronsignal H erheblich gestört (Phasenjitter, ausbleibende und zusätzliche H-Impulse). Deshalb wird bei Störungen die enge Kopplung von Systemtakt und Datentakt an das Horizontalsignal des Eingangsvideosignales aufgehoben. Im Zusammenhang mit einer im folgenden zu beschreibenden Vorrichtung zur Durchführung des erfindungsgemäßen Verfahrens wird diese Taktankopplung noch näher beschrieben.

FIG 11 zeigt eine solche Vorrichtung zum Reduzieren der beim Abspielen von Videomagnetbändern in Videorekordern auftretenden Bildstörungen. Die Vorrichtung weist eine Eingangsstufe ES auf, in der die analogen Bildsignale (Y Luminanzsignal, U, V Chromasignale) digitalisiert und in ein geeignetes Speicherformat konvertiert werden. Diese Eingangsstufe ES besteht zweckmäßiger Weise aus einer A/D-Wandlereinrichtung AD mit nachgeschaltetem Eingangsdateninterface II. Eine an den Ausgang der Eingangsstufe ES angeschlossene Speichereinrichtung FM ist zum Speichern der digitalisierten Bildsignale Y, U, V vorgesehen. Mit dieser Speichereinrichtung FM ist eine Ausgangsstufe AS, die zweckmäßigerweise einen D/A-Wandler enthält und zum Umwandeln der in der Speichereinrichtung FM gespeicherten Videosignaldaten in ein geeignetes analoges Bildsignal vorgesehen ist, verbunden. An den Ausgangsklemmen der Ausgangsstufe AS erscheint wieder ein Bildsignal Y$'$, U$'$, V$'$. Die Vorrichtung weist weiterhin eine mit einer Takteinrichtung TI verbundene Steuereinrichtung SI zum kontrollierten Einschreiben und Auslesen der Videosignaldaten in bzw. aus der Speichereinrichtung FM auf. Dazu enthält die Steuereinrichtung SI zweckmäßigerweise einen Speichercontroller MC mit Schreibeinheit WRU und Leseeinheit RDU. Zusätzlich ist die Steuereinrichtung SI mit einer Detektiereinrichtung DE verbunden, die zum Erfassen einer Störung des analogen Videosignales des Videorekorders VCR geeignet ist. Am Ausgang dieser Detektiereinrichtung DE steht bei einer erfaßten Störung ein Schreibverhinderungssignal d an. Gemäß dem erfindungsgemäßen Verfahren wird das Einschreiben der durch die Störung des analogen Videosignales auch gestörten Bildsignaldaten in die Speichereinrichtung FM verhindert. In der Takteinrichtung TI wird ein aus dem Synchronsignal CSin des Videosignals gewonnener Datentakt cld gewonnen. Die Datentakte cld zum Einschreiben und die Auslesetaktsignale cls und cls$'$ sind bei ungestörtem Videosignal zweckmäßigerweise phasenstarr verkoppelt. Die Takteinrichtung TI und die Steuereinrichtung SI sind über zwei Leitungen miteinander verbunden, wobei auf einer Leitung der durch die Takteinrichtung TI erzeugte Systemtakt cls dem Speicherkontroller SI zugeführt wird und auf der anderen Leitung der Takteinrichtung TI eine Taktkonstante tc zugeführt werden kann. Bei auftretenden Störungen wird die enge Kopplung von Systemtakt cls und Datentakt cld an das Horizontalsignal des Eingangsvideosignales (in CSin) aufgehoben durch Umschaltung einer Zeit konstanten mittels des Signales tc. Die Steuereinrichtung SI weist zusätzlich eine Ausgangsklemme auf, an der ein zu den ausgangsseitigen Bildsignalen Y$'$, U$'$, V$'$ passendes Synchronsignal CSout anliegt.

In FIG 12 ist eine Ausführungsform der Takteinrichtung TI gezeigt. Diese Takteinrichtung TI besteht aus einer in seiner Zeitkonstanten umschaltbaren H-PLL-Schaltung und einem von deren Ausgangssignal H1 geführten Taktsystem TS. Durch das von der Steuereinrichtung SI bei auftretender Störung generierte Signal tc wird die Zeitkonstante der H-PLL-Schaltung auf eine langsame Zeitkonstante (typisch größer als 15 Zeilen) geschaltet. Damit ist stets gewährleistet, daß auch bei einer auftretenden Störung des Videosignales ein ungestörtes Auslesen des Inhaltes der Speichereinrichtung FM möglich ist.

Durch das erfindungsgemäße Verfahren können Störungen des Videosignales reduziert werden. Solche Störungen können Drop-out-Störungen oder Spurwechselstörungen sein. Bei Spurwechselstörungen ist die erfindungsgemäße Einschreibverhinderung mit einer geeigneten Umschaltung der Taktankopplung durchzuführen. Das erfindungsgemäße Verfahren setzt also bei einem gestörten Videosignal an und nutzt die zeitlichen Abhängigkeiten in Bewegtbildszenen aus. Es unterscheidet sich daher grundlegend von den herkömmlichen Verfahren zum Reduzieren des Störzoneneinflusses und von der bekannten Dropout-Kompensation durch Zeilenwiederholung.

## Ansprüche

1. Verfahren zum Reduzieren der beim Abspielen von Videomagnetbändern in Videorekordern auftretenden Bildstörungen unter Verwendung einer Speichereinrichtung, deren Speicherplätze nach Maßgabe eines Einschreibtaktsignales mit aus einem analogen Videosignal des Videomagnetbandes erzeugten Videosignaldaten beschrieben und nach Maßgabe eines Auslesetaktsignales ausgelesen werden, und daß bei einer Störung des analogen Videosignales ein Schreibverhinderungssignal (d) generiert und das Einschreiben der durch die Störung des analogen Videosignales auch gestörten Videosignaldaten in die Speichereinrichtung verhindert wird,

**dadurch gekennzeichnet,** daß das Einschreibtaktsignal aus einem Synchronsignal des analogen Videosignales gewonnen wird, daß das Einschreibtaktsignal und das Auslesetaktsignal phasenstarr miteinander verkoppelt sind und beim Auftreten des Schreibverhinderungssignales (d) die phasenstarre Verkopplung aufgehoben und eine externe Taktankopplung eingeleitet wird.

2. Verfahren nach Anspruch 1, **dadurch gekennzeichnet,** daß das Schreibverhinderungssignal (d) bei einem auftretenden Fehler in der magnetischen Beschichtung des Videomagnetbandes (Drop-out-Fehler) generiert wird.

3. Verfahren nach einem der Ansprüche 1 bis 2, **dadurch gekennzeichnet,** daß das Schreibverhinderungssignal (d) bei Störungen generiert wird, die durch einen oder mehrere Videospurwechsel eines Videokopfes bedingt sind (Spurwechselstörzone).

4. Verfahren nach einem der Ansprüche 1 bis 3, **gekennzeichnet** durch die Verwendung bei Zeitlupendarstellung.

5. Verfahren nach einem der Ansprüche 1 bis 3, **gekennzeichnet** durch die Vewendung bei schnellem Suchlauf.

6. Vorrichtung zur Durchführung des Verfahrens nach einem der Ansprüche 1 bis 5, **gekennzeichnet** durch folgende Merkmale:

a) eine Eingangsstufe (ES), in der die aus dem analogen Videosignal gewonnenen Bildsignale (Y, U, V) digitalisiert und in ein geeignetes Speicherformat konvertiert werden.

b) eine mit der Eingangsstufe (ES) verbundene Speichereinrichtung (FM) zum Speichern der digitalisierten Videosignaldaten;

c) eine mit der Speichereinrichtung (FM) verbundene Ausgangsstufe (AS) zum Umwandeln der in der Speichereinrichtung (FM) gespeicherten Videosignaldaten in ein geeignetes Bildsignal; ($Y'$, $U'$, $V'$)

d) eine mit einer Takteinrichtung (TI) verbundene Steuereinrichtung (SI) zum kontrollierten Einschreiben und Auslesen der Videosignaldaten;

e) eine Detektiereinrichtung (DE) zum Erfassen einer Störung des analogen Videosignales, die mit der Steuereinrichtung (SI) in Verbindung steht.

7. Vorrichtung nach Anspruch 6, **dadurch gekennzeichnet,** daß die Takteinrichtung (TI) Mittel enthält, nach Maßgabe eines im analogen Videosignal enthaltenem Synchronsignal mindestens die Einschreibtaktsignale und die Auslesetaktsignale zu erzeugen, daß die Takteinrichtung (TI) weiterhin Mittel enthält, durch die das Auslesetaktsignal und das Einschreibtaktsignal phasenstarr an das Video-Synchronisationssignal gekoppelt sind, wobei diese phasenstarre Taktankopplung beim Erfassen einer Störung des analogen Bildsignales abschaltbar ist.

FIG1

FIG2

FIG3

FIG4

FIG5

## FIG 6

VB

t2  D

t1  D

4v

9  8  7  6  5  K2 D  4 3  2 1  K1 D

## FIG 7

| K1 | H1 |
|----|----|
| K2 | H6 |
| K1 | H3 |
| K2 | H8 |

t2

| K1 | H1 |
|----|----|
|    |    | SD
| K1 | H3 |
|    |    | B

t1

← t

## FIG 8

v/2

t6  t5  t4  t3  t2  t1

VB

VB

7 6  5 4  K2 K1 3 2 K2  K1 1 0

## FIG 9

| K1 | H3 |
|----|----|
| K2 | H2 |

t6

| K1 | H3 |
|----|----|
| K2 | H2 |

t5

| K2 | H2 |
|----|----|

t4

| K1 | H1 |
|----|----|
| K1 | H1 |

t3

| K1 | H1 |
|----|----|
|    |    | SD

SD  t2

| K1 | H1 |
|----|----|
|    |    | SD
|    |    | B

t1

← t

# FIG 10

# FIG 11

# FIG 12

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-4 345 272 (SHIROTA) * Spalte 14, Zeile 56 - Spalte 16, Zeile 41 * | 1-6 | H 04 N 9/88 |
| Y | US-A-4 577 237 (COLLINS) * Spalte 3, Zeile 10 - Spalte 4, Zeile 62; Spalte 6, Zeile 48 - Spalte 7, Zeile 37 * | 1-6 | |
| A | --- | 7 | |
| Y | US-A-4 376 290 (SHIROTA) * Spalte 19, Zeile 36 - Spalte 20, Zeile 68; Spalte 24, Zeilen 24-61 * | 1-6 | |
| Y | US-A-4 199 780 (TAYLOR) * Spalte 3, Zeilen 3-53 * | 1-6 | |
| Y | US-A-4 139 867 (FOERSTER) * Spalte 3, Zeile 17 - Spalte 6, Zeile 38 * | 1-6 | |
| A | --- | 7 | RECHERCHIERTE SACHGEBIETE (Int. Cl.5) |
| Y | US-A-4 293 879 (HEITMANN et al.) * Spalte 3, Zeile 5 - Spalte 7, Zeile 64 * | 1-6 | H 04 N |
| A | --- | 7 | |
| Y | US-A-4 558 376 (HEITMANN) * Spalte 4, Zeile 29 - Spalte 6, Zeile 12 * | 1-6 | |
| Y | GB-A-2 192 766 (MITSUBISHI DENKI K.K.) * Seite 3, Zeile 16 - Seite 5, Zeile 15 * | 1-6 | |

Der vorliegende Recherchenbericht wurde für alle Patentansprüche erstellt

| Recherchenort | Abschlußdatum der Recherche | Prüfer |
|---|---|---|
| DEN HAAG | 03-11-1989 | VERSCHELDEN J. |